# EUROPÄISCHE PATENTSCHRIFT

(11) **EP 2 614 235 B1**
(45) Veröffentlichungstag und Bekanntmachung des Hinweises auf die Patenterteilung: **11.11.2015**
(21) Anmeldenummer: 11755274.5
(22) Anmeldetag: 05.09.2011
(51) Int. Cl.: F02B 37/18, F01D 17/14, F02C 6/12, F02C 9/18

(54) **ABGASTURBOLADER MIT EINEM BYPASSVENTIL**
EXHAUST-GAS TURBOCHARGER HAVING A BYPASS VALVE
TURBOCOMPRESSEUR À GAZ D'ÉCHAPPEMENT COMPRENANT UNE SOUPAPE DE DÉRIVATION

(30) Priorität: 08.09.2010 DE 102010044683
(43) Veröffentlichungstag der Anmeldung: 17.07.2013
(73) Patentinhaber: Volkswagen Aktiengesellschaft, 38436 Wolfsburg (DE)
(72) Erfinder: KÜHLMEYER, Jens, 38518 Gifhorn (DE); HAGELSTEIN, Dirk, 38110 Braunschweig (DE); LIPPERT, Eduard, 38547 Calberlah (DE)
(86) Internationale Anmeldenummer: PCT/EP2011/004453
(87) Internationale Veröffentlichungsnummer: WO 2012/031727

(56) Entgegenhaltungen:
- DE-A1-102006 024 783
- DE-A1-102007 013 257
- DE-A1-102007 055 630
- GB-A- 2 068 455
- US-A1- 2002 078 934

## Beschreibung

Die Erfindung betrifft einen Abgasturbolader für eine Brennkraftmaschine, der mit einem Bypassventil ausgeführt ist, welches in einem Bypasskanal einer Turbine zwischen einer Abgasdruckleitung und einem Auslassquerschnitt der Turbine des Abgasturboladers angeordnet ist. Das Bypassventil ist zur Steuerung des Durchflusses von Abgas durch den Bypasskanal mit einem elektrisch und/oder pneumatisch betätigbaren Stellmittel verbunden und besteht aus einem Ventilteller und einem Ventilschaft. Durch das Bypassventil ist ein Teilstrom des Abgases bedarfsweise an der Turbine vorbeileitbar. Der Ventilschaft ist in einer Schiebeführung axial beweglich gehalten. Um den Bypasskanal strömungsdicht zu verschließen, ist der Ventilteller in einem geschlossenen Zustand des Bypassventils gegen einen Ventilsitz anlegbar.

Im Betrieb einer Brennkraftmaschine mit einem Abgasturbolader wird über einen Bypasskanal für eine Turbine des Abgasturboladers ein Teilstrom des Abgases wahlweise an der Turbine vorbeigeleitet. Hierzu ist in dem Bypasskanal ein auch als Wastegateventil bezeichnetes Bypassventil zum Öffnen oder Schließen des Bypasskanals angeordnet. Das Bypassventil besteht aus einem Ventilteller und einem Ventilschaft. Der Ventilteller wird in einem geschlossenen Zustand des Bypassventils gegen einen Ventilsitz gedrückt. Bei einer Lastanforderung an die Brennkraftmaschine wird das Bypassventil geschlossen und mit einer vorbestimmten Kraft gegen den Ventilsitz gedrückt, wobei die Kraft derart gewählt wird, dass während der Lastanforderung der Bypasskanal gegen den Abgasdruck der Brennkraftmaschine strömungs- und druckdicht verschlossen ist.

Abgasturbolader mit einem Bypasskanal für die Turbine des Abgasturboladers sind aus den Druckschriften WO 2006/046810 A1, US 4,171,936 A, GB 1,049,656 A und GB 2 033 007 A bekannt. Diese zeigen einen Abgasturbolader mit einem in dem Bypasskanal angeordneten Bypassventil. Auf das aus dem genannten Stand der Technik bekannte Bypassventil wirkt ein mechanisch und/oder pneumatisch arbeitendes Stellmittel. Das Stellmittel ist für die pneumatische Steuerung ein mit dem Ventilschaft verbundener Druckkolben beziehungsweise eine Druckmembran, die in einem von dem Bypasskanal abgetrennten Arbeitsraum beweglich angeordnet ist. Dieser Arbeitsraum ist über eine Druckleitung mit dem ladeluftseitigen Saugrohr verbunden.

Aus der Druckschrift US 2002/0078934 A1 ist ein Stellmittel bekannt, das elektrisch beziehungsweise elektro-mechanisch angetrieben wird. Ein Bypassventil zur Umgehung einer Turbine eines Abgasturboladers weist einen Ventilteller und einen Ventilschaft auf. In bestimmten Ausführungsformen ist der Ventilschaft des Bypassventils in einem Gehäuse eines Abgaskrümmers geführt gelagert.

Die Ansteuerung des Bypassventils durch den Einsatz eines elektrischen Stellmittels lässt sich präziser und unabhängig von den Druckverhältnissen im Abgasturbolader, jedoch zu jeder Zeit abhängig von dem Arbeitsbereich und der Lastanforderung der Brennkraftmaschine gestalten. Da die elektrischen Stellmittel die pneumatischen Kräfte des Abgasturboladers nicht ausnutzen können, müssen sie ausreichend leistungsstark ausgeführt sein. Solche leistungsstarken elektrischen Stellmittel benötigen nicht nur viel Energie, sondern sie haben auch eine entsprechend große Masse mit den dadurch verursachten Kosten sowie einen erhöhten Platzbedarf.

Um den Kraftaufwand des Stellmittels gegen den Abgasdruck zu reduzieren, ist es bekannt, das Bypassventil in Form eines Tellerventils mit Ventilteller und Ventilschaft auszuführen. Dabei wirkt der Abgasdruck im geschlossenen Zustand des Ventils gegen den Ventilteller und drückt diesen in den Ventilsitz, wodurch die Druck- und Strömungsdichtigkeit unterstützt wird.

In der Druckschrift GB 2 068 455 A ist ein Abgasventil für aufgeladene Brennkraftmaschinen beschrieben, welches einen Abgasmengenstrom durch eine Umgehungsleitung für eine Turbine steuerbar macht. Das Ventil weist einen Ventilteller und einen Ventilschaft auf, wobei in einer Ausführungsweise die mit dem Ventilschaft verbundene Seite des Ventiltelles einer Abgasdruckleitung der Brennkraftmaschine zugewandt ist. Das Abgasventil wird insoweit selbststeuernd geöffnet, als einer Druckdose über eine Leitung Abgas von der Brennkraftmaschine zugeführt wird, so dass bei Überschreiten einer Schwelle eine mit einer Federkraft beaufschlagte Wand in der Druckdose, in welcher der Ventilschaft aufgenommen ist, bewegt wird.

Aus der Druckschrift DE 10 2006 024 783 A1 geht eine zweistufige Abgasturboladeranordnung hervor. Ein Bypass einer Hochdruckturbine verbindet einen Abgaskrümmer mit einem Niederdruckturbinengehäuse abgasführend miteinander und ist mittels eines Drosselorgans verschließbar. In einer konkreten Ausführung weist das Drosselorgan ein Ventil mit Ventilteller und Ventilschaft auf, wobei der Ventilschaft durch den Abgaskrümmer verläuft und schiebebeweglich gelagert ist. Das Drosselorgan kann mit einer Stellvorrichtung in Richtung des Ventilschafts betätigt werden.

Vor diesem Hintergrund liegt der Erfindung die Aufgabe zugrunde, einen Abgasturbolader der eingangs genannten Art derart auszuführen, dass für das Bypassventil im Bypasskanal der Turbine des Abgasturboladers ein kostengünstiges Stellmittel mit geringer Leistungsaufnahme, insbesondere mit kleinem Bauraum und/oder geringer Masse, vorgesehen werden kann.

Diese Aufgabe wird gelöst mit einem Abgasturbolader mit den Merkmalen des unabhängigen Anspruchs 1. Die abhängigen Ansprüche betreffen besonders zweckmäßige Weiterbildungen der Erfindung.

Erfindungsgemäß ist ein Abgasturbolader vorgesehen, bei dem der Abgasdruckleitung die mit dem Ventilschaft verbundene Seite des Ventiltellers zugewandt ist, sodass der Ventilteller zum Öffnen des Bypassventils in Richtung des Auslassquerschnitts bewegt wird. Insbesondere steht die mit dem Ventilschaft verbundene Seite des Ventiltellers in fluidischem Kontakt mit dem Gas. In vorteilhafter Weise wird mit der erfindungsgemäß Anordnung im Abgasturbolader erreicht, dass eine geringe Leistungsaufnahme erforderlich ist, da der Ventilteller im geöffneten Zustand keine Gaskraft in Schließrichtung erfährt.

Dabei ist an dem Bypassventil eine in einer Ausnehmung eines Gehäuses des Abgasturboladers bewegliche Druckplatte ausgebildet. Durch den Einsatz der Druckplatte ist es möglich, die erforderliche Stellkraft des Bypassventils zu reduzieren. Die Druckplatte ist derart an dem Bypassventil angeordnet, dass die Anströmung des Bypassventils aus der Abgasdruckleitung genau zwischen dem Ventilteller und der Druckplatte erfolgt. Insbesondere steht eine dem Ventilteller gegenüberliegend angeordnete Seite der Druckplatte in fluidischem Kontakt mit dem Gas. Somit wirkt die Gaskraft zugleich auf den Ventilteller und die Druckplatte. Bevorzugt ist die Fläche der dem Gas ausgesetzte Seite der Druckplatte kleiner oder gleich der Fläche der dem Gas ausgesetzte Seite des Ventiltellers. Da die Wirkung der Gaskraft auf den Ventilteller und die Druckplatte in entgegengesetzter Richtung erfolgt, heben sich die Kräfte gegenseitig nahezu auf. Die Abgasdruckleitung, auch Krümmer genannt, ist eine Verbindung zwischen der Brennkraftmaschine und dem Abgasturbolader, in der das unter hohem Druck stehende Abgas von dem Zylinder der Brennkraftmaschine zu der Turbine des Abgasturboladers transportiert wird.

Bevorzugt ist die Ausnehmung gegenüber dem Bypasskanal mittels zumindest eines Dichtelements der Druckplatte nahezu strömungsdicht verschlossen. So wird weitgehend verhindert, dass der Gasdruck hinter die Druckplatte strömen kann. Der Gasdruck wirkt sowohl auf den Ventilteller als auch auf die Druckplatte mit nahezu derselben Kraft, jedoch in entgegengesetzter Richtung, mit antiparallel zueinander orientierten Kräften. Da die Druckplatte über den Ventilschaft mit dem Ventilteller verbunden ist, heben sich die Kräfte gegeneinander nahezu vollständig auf. Das Stellmittel des Bypassventils, zur Steuerung des Durchflusses von Abgas durch den Bypasskanal, muss im Wesentlichen nur noch die Reibungswiderstände der Dichtungen überwinden. Dies ist besonders bei stark pulsierenden Abgasbeaufschlagungen günstig. Bevorzugt ist das Stellmittel elektrisch und/oder pneumatisch betätigbar.

Für eine Montage des Ventils durch den Ventilsitz hindurch ist es jedoch besonders zweckmäßig, gegebenenfalls erforderlich, dass der Durchmesser der Druckplatte etwas kleiner ist als der Durchmesser des Ventiltellers. Somit muss das Stellmittel lediglich die Kraft für die Änderung der Position des Bypassventils aufbringen, welche nur aus den Reibkräften der Dichtungen und der aus dem Verhältnis des für den Abgasdruck Wirksamen Querschnitts des Ventiltellers und der Druckplatte verbleibenden Restkraft besteht. Da die druckwirksame Querschnittsfläche des Ventiltellers aus Montagegründen größer ist als die druckwirksame Querschnittsfläche der Druckplatte, wirkt die resultierende Abgaskraft stets in Richtung Öffnen des Bypassventils. Da die resultierende Abgaskraft größer ist als die zu überwindenden Reibkräfte der Dichtungen, ist bei einem Ausfall des Stellmittels eine Selbstöffnung des Bypassventils sichergestellt.

Damit sich bei der Bewegung des Bypassventils in der Ausnehmung hinter der Druckplatte kein Gegendruck aufbauen kann, ist es vorteilhaft, dass die Ausnehmung mit einem Auslassquerschnitt der Turbine durch eine insbesondere in dem Gehäuse des Abgasturboladers ausgebildete Ausgleichsleitung verbunden ist. Somit wird zugleich sichergestellt, dass an der zur Führung und Abdichtung des Bypassventils vorgesehenen Schiebeführung stets der niedrige Abgasdruck nach der Turbine anliegt. Dieses Druckniveau ist dichtungstechnisch leichter zu beherrschen als der in der Abgasdruckleitung vor der Turbine herrschende Druck. Der hohe Druck liegt lediglich an der wesentlich größeren Dichtung der Druckplatte an.

Eine weitergebildete, vorteilhafte Ausführungsform des erfindungsgemäßen Abgasturboladers hat einen Ventilsitz, an dem eine Maskierung angeordnet ist. Diese Maskierung erlaubt es, die Abgasdurchsatzkennlinie wunschgemäß modellieren zu können. Die Maskierung ist als ein stegartiger Vorsprung ausgebildet, der entlang des Ventilsitzes gegenüber der unmittelbaren Umgebung in Richtung des Auslassquerschnitts erhaben ist. Hierdurch wird bis zu einem wunschgemäßen Öffnungshub des Bypassventils die Fläche des Öffnungsspalts zwischen Ventilteller und Ventilsitz entsprechend der Ausdehnung der Maskierung eingeschränkt. Durch eine solche Maskierung kann der Abgasstrom durch das Bypassventil bei kleinen Öffnungshüben gehindert werden, über den vollen Kreisquerschnitt des Ventilsitzes auszuströmen. Bei einer Maskierung, die sich beispielsweise einen Millimeter gegenüber dem Ventilsitz erhebt und ein Sechstel des Kreisumfangs des Ventilsitzes abdeckt, kann der Abgasstrom bei Ventilhüben bis zu einem Millimeter nur über fünf Sechstel des Kreisumfangs und bei Ventilhüben über einen Millimeter über den vollen Kreisumfang durch das Bypassventil strömen. Darüber hinaus kann durch die Wahl der Position der Maskierung die Ausströmrichtung des Abgases beeinflusst werden.

Aufgrund der gegenüber dem Stand der Technik stark reduzierten Stellkraft sowie der Möglichkeit, mittels einer Maskierung die Durchflusscharakteristik des Abgases flexibel gestalten zu können, ist das erfindungsgemäße Bypassventil auch als zwei- oder mehrstufiges Regelventil einsetzbar.

Die Erfindung lässt zahlreiche Ausführungsformen zu. Insbesondere können diese Ausführungsformen einzelne, mehrere oder alle in dieser Darstellung beschriebenen Merkmale aufweisen. Zur weiteren Verdeutlichung ihres Grundprinzips sind zwei Ausführungsformen in der Zeichnung dargestellt und werden nachfolgend beschrieben. Diese zeigt in
- Fig. 1: eine schematische Darstellung einer Ausführungsform eines Abgasturboladers;
- Fig. 2: eine geschnittene Darstellung eines Bypassventils einer ersten Ausführungsform in einem geschlossenen Zustand;
- Fig. 3: eine geschnittene Darstellung des Bypassventils der ersten Ausführungsform in einem geöffneten Zustand;
- Fig. 4: eine schematische Ansicht eines Auslassquerschnitts des Abgasturboladers mit einem Bypassventil einer zweiten Ausführungsform in einem geschlossenen Zustand;
- Fig. 5: eine geschnittene Darstellung des Bypassventils der zweiten Ausführungsform in einem geschlossenen Zustand;
- Fig. 6: eine geschnittene Darstellung des Bypassventils der zweiten Ausführungsform in einem teilweise geöffneten Zustand;
- Fig. 7: eine geschnittene Darstellung des Bypassventils der zweiten Ausführungsform in einem vollständig geöffneten Zustand
- Fig. 8: eine geschnittene Darstellung einer weiteren Variante eines Abgasturboladers mit einem vergrößerte Ausschnitt eines Bypassventils des Abgasturboladers.

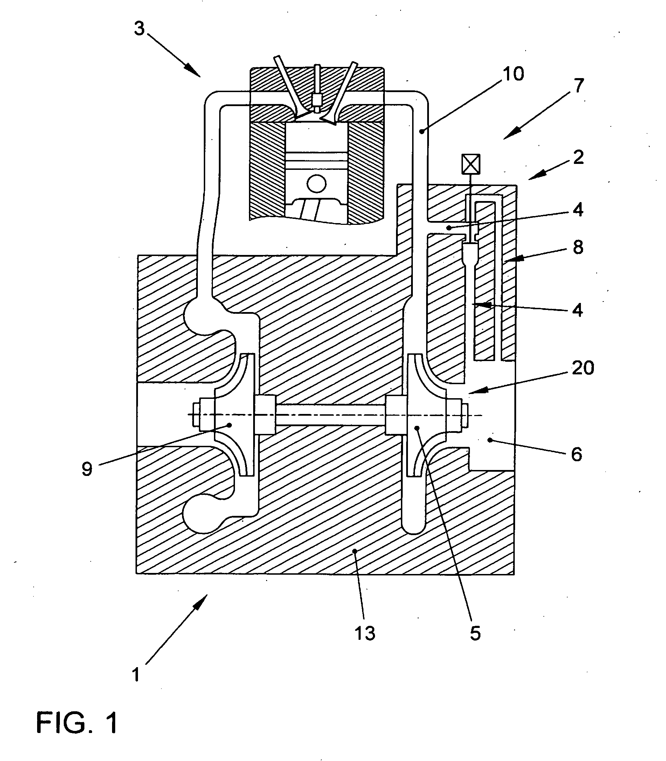

Figur 1 zeigt einen Abgasturbolader 1 einer Brennkraftmaschine 3. Der Abgasturbolader 1 hat ladeluftseitig einen Kompressor 9 und abgasseitig eine Turbine 5. In dem Gehäuse 13 des Abgasturboladers 1 ist zur Umgehung der Turbine 5 ein Bypasskanal 4 vorgesehen. Der Bypasskanal 4 verbindet eine Abgasdruckleitung 10 mit einem Auslassquerschnitt 6 der Turbine 5. In dem Bypasskanal 4 ist ein Bypassventil 2 zum Verschließen des Bypasskanals 4 angeordnet. Die gezeigte Ausführungsform hat einen von dem Bypassventil 2 und der Abgasdruckleitung 10 begrenzten Abschnitt des Bypasskanals 4, welcher auch als Abzweigung der Abgasdruckleitung 10 bezeichnet werden kann. Eine Ausgleichsleitung 8 verbindet eine Ausnehmung im Bereich des Bypassventils 2 mit dem Auslassquerschnitt 6, sodass in der Ausnehmung stets derselbe Druck herrscht wie in dem Auslassquerschnitt 6.

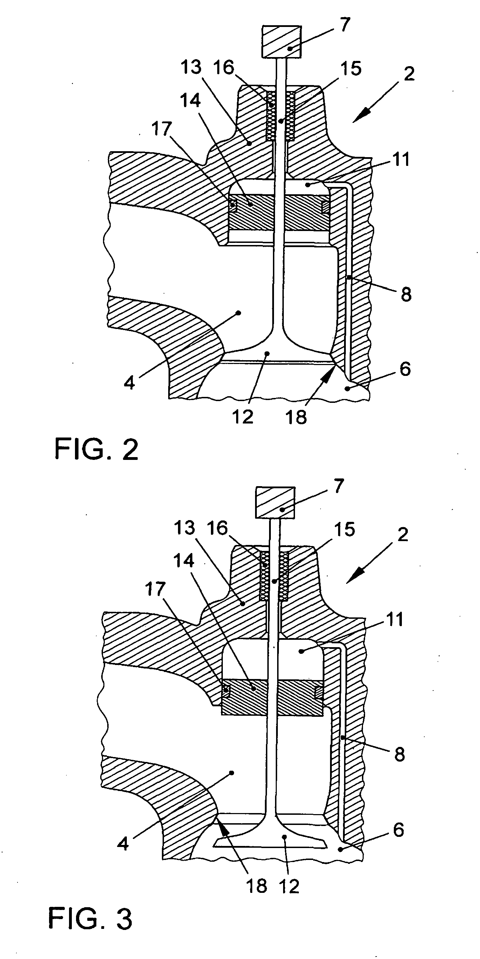

Die Figuren 2 und 3 zeigen eine geschnittene, vergrößerte Darstellung des Bypassventils 2. Das in dem Bypasskanal 4 angeordnete Bypassventil 2 besteht aus einem Ventilteller 12 und einer Druckplatte 14, die beide mit einem Ventilschaft 15 verbunden und gemeinsam mit dem Ventilschaft 15 beweglich sind. In dem Gehäuse 13 des Abgasturboladers ist eine Ausnehmung 11 vorgesehen, in der die Druckplatte 14 beweglich angeordnet ist. Die Druckplatte 14 hat zumindest ein Dichtelement 17, das die Ausnehmung 11 gegenüber dem Bypasskanal 4 strömungs- und druckdicht verschließt. Das Bypassventil 2 ist mit dem Ventilschaft 15 in einer Schiebeführung 16 axial beweglich gehalten. Die Schiebeführung 16 dient weiterhin der Abdichtung der Ausnehmung 11 gegenüber der Umwelt. Bei dem Bypassventil 2 ist die mit dem Ventilschaft 15 verbundene Seite des Ventiltellers 12 der in Figur 1 gezeigten Abgasdruckleitung zugewandt. Bewegt wird das Bypassventil 2 durch ein Stellmittel 7. Die Ausnehmung 11 ist über die Ausgleichsleitung 8 mit dem Auslassquerschnitt 6 verbunden.

Figur 2 zeigt das Bypassventil 2 in einem geschlossenen Zustand. Dabei liegt der Ventilteller 12 an einem Ventilsitz 18 an. Das mit dem Ventilschaft 15 verbundene Stellmittel 7 erzeugt eine Schließkraft, um so den Bypasskanal 4 gas- und druckdicht zu verschließen.

Figur 3 zeigt das Bypassventil 2 in einem geöffneten Zustand. Der Ventilteller 12 weist zu dem Ventilsitz 18 einen Abstand auf, der sich als Ringspalt ausgebildet hat. Die Druckplatte 14 wurde in der Ausnehmung 11 um denselben Ventilhubweg bewegt.

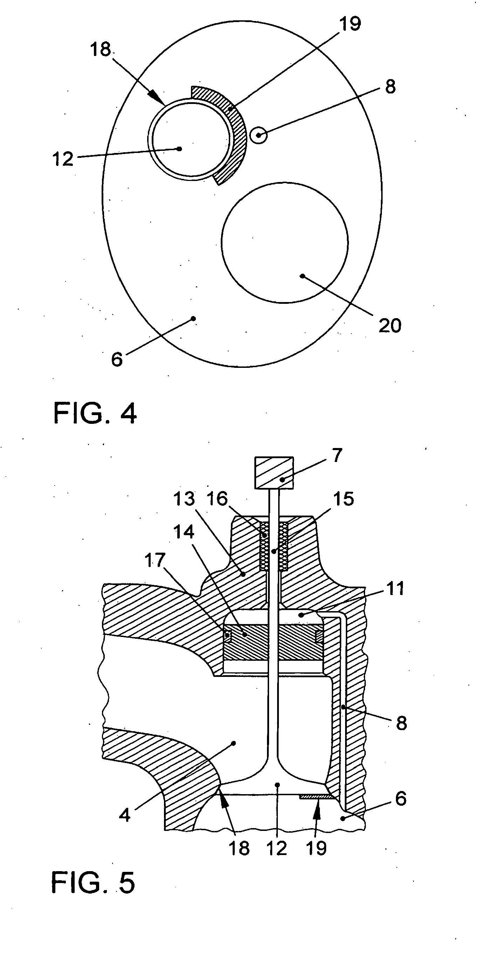

Figuren 4, 5, 6 und 7 zeigen eine zweite Ausführungsform des in den vorhergehenden Figuren beschriebenen Bypassventils 2. Bei dieser Ausführungsform ist an dem Ventilsitz 18 eine Maskierung 19 angeordnet. Die Maskierung 19 ist als ein stegartiger Vorsprung ausgebildet, der entlang des Ventilsitzes 18 gegenüber der unmittelbaren Umgebung in Richtung des Auslassquerschnitts 6 erhaben ist. Hierdurch wird bis zu einem wunschgemäßen Öffnungshub des Bypassventils 2 die Fläche des Öffnungsspalts zwischen Ventilteller 12 und Ventilsitz 18 entsprechend der Ausdehnung der Maskierung 19 eingeschränkt. Durch eine solche Maskierung 19 kann der Abgasstrom durch das Bypassventil 2 bei kleinen Öffnungshüben gehindert werden, über den vollen Kreisquerschnitt des Ventilsitzes 18 auszuströmen.

Figur 4 zeigt eine schematische Ansicht des Auslassquerschnitts 6 des Abgasturboladers. Zu erkennen sind von dem Bypassventil die dem Auslassquerschnitt 6 zugewandte Seite des Ventiltellers 12, die Ausgleichsleitung 8, der Ventilsitz 18, die an dem Ventilsitz 18 angeordnete Maskierung 19 und eine Ausströmöffnung 20 der Turbine.

Figur 5 zeigt das Bypassventil in einem geschlossenen Zustand. Dabei liegt der Ventilteller 12 an einem Ventilsitz 18 an. Die Maskierung 19 ist in diesem Zustand des Bypassventils 2 ohne Wirkung.

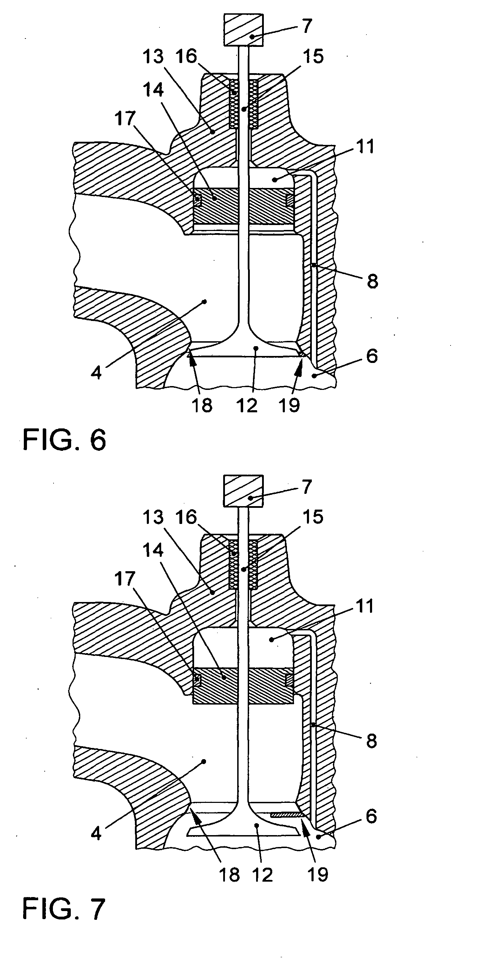

Figur 6 zeigt das Bypassventil in einem teilweise geöffneten Zustand. Der Ventilteller 12 weist zu dem Ventilsitz 18 einen Abstand auf. Durch diesen Abstand bildet sich ein Spalt aus, der jedoch durch die Maskierung 19 begrenzt ist. Im Bereich der Maskierung 19 weist der Ventilteller 12 zu dem Ventilsitz 18 zwar einen Abstand auf, doch da der Ventilteller 12 nun an der Maskierung 19 anliegt, bildet sich hier lokal kein Spalt aus.

Figur 7 zeigt das Bypassventil in einem vollständig geöffneten Zustand. Der Ventilteller 12 weist nun sowohl zu dem Ventilsitz 18 als auch zu der Maskierung 19 einen Abstand auf: Der Spalt zwischen dem Ventilteller 12 und dem Ventilsitz 18 beziehungsweise der Maskierung 19 ist über den gesamten Umfang des Ventiltellers 12 ausgebildet.

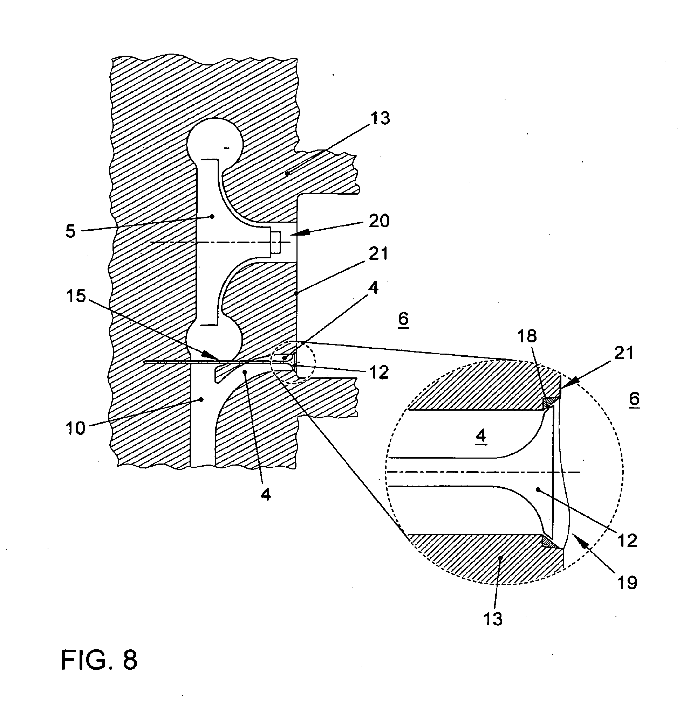

Figur 8 zeigt eine weitere Ausführungsform des Abgasturboladers, bei dem die Maskierung 19 durch eine zweckmäßige räumliche Ausformung einer Fläche 21 des Gehäuses 13 gebildet ist.

## Patentansprüche

1. Abgasturbolader (1), insbesondere für eine Brennkraftmaschine (3), der mit einem Bypassventil (2) ausgeführt ist, welches in einem Bypasskanal (4) einer Turbine (5) zwischen einer Abgasdruckleitung (10) und einem Auslassquerschnitt (6) der Turbine (5) des Abgasturboladers (1) angeordnet ist und mit einem Stellmittel (7) zur Steuerung des Durchflusses von Abgas durch den Bypasskanal (4) verbunden ist, wobei durch das Bypassventil (2) ein Teilstrom des Abgases bedarfsweise an der Turbine (5) vorbeileitbar ist, das Bypassventil (2) einen Ventilteller (12) und einen Ventilschaft (15) hat, das Bypassventil (2) mit dem Ventilschaft (15) axial beweglich gehalten ist und der Ventilteller (12) in einem geschlossenen Zustand des Bypassventils (2) gegen einen Ventilsitz (18) ablegbar ist, um den Bypasskanal (4) gas- und druckdicht zu verschließen, wobei die mit dem Ventilschaft (15) verbundene Seite des Ventiltellers (12) der Abgasdruckleitung (10) zugewandt ist, **dadurch gekennzeichnet, dass** an dem Bypassventil (2) eine am Ventilschaft aufgenommene Druckplatte (14) ausgebildet ist, die in einer Ausnehmung (11) eines Gehäuses (13) des Abgasturboladers (1) beweglich ist.

2. Abgasturbolader (1) nach Anspruch 1, **dadurch gekennzeichnet, dass** die Fläche der dem Gas ausgesetzte Seite der Druckplatte (14) kleiner oder gleich der Fläche der dem Gas ausgesetzte Seite des Ventiltellers (12) ist.

3. Abgasturbolader (1) nach zumindest einem der vorangehenden Ansprüche, **dadurch gekennzeichnet, dass** der Ventilschaft (15) in einer Schiebeführung (16) axial beweglich gehalten ist.

4. Abgasturbolader (1) nach zumindest einem der vorangehenden Ansprüche, **dadurch gekennzeichnet, dass** das Stellmittel (7) elektrisch und/oder pneumatisch betätigbar ist:

5. Abgasturbolader (1) nach zumindest einem der vorangehenden Ansprüche, **dadurch gekennzeichnet, dass** die Ausnehmung (11) gegenüber dem Bypasskanal (4) mittels eines Dichtelements (17) der Druckplatte (14) strömungsdicht verschlossen ist.

6. Abgasturbolader (1) nach zumindest einem der vorangehenden Ansprüche, **dadurch gekennzeichnet, dass** die Ausnehmung (11) mit dem Auslassquerschnitt (6) der Turbine (5) durch eine Ausgleichsleitung (8) verbunden ist.

7. Abgasturbolader (1) nach Anspruch 6, **dadurch gekennzeichnet, dass** die Ausgleichsleitung (8) in dem Gehäuse (13) des Abgasturboladers (1) ausgebildet ist.

8. Abgasturbolader (1) nach zumindest einem der vorangehenden Ansprüche, **dadurch gekennzeichnet, dass** an dem Ventilsitz (18) eine Maskierung (19) vorgesehen ist.

## Claims

1. Exhaust-gas turbocharger (1), in particular for an internal combustion engine (3), said exhaust-gas turbocharger being equipped with a bypass valve (2) which is arranged in a bypass duct (4) of a turbine (5) between an exhaust-gas pressure line (10) and an outlet cross section (6) of -the turbine (5) of the exhaust-gas turbocharger (1), and being connected to an actuating means (7) for controlling the throughflow of exhaust gas through the bypass duct (4), wherein, by means of the bypass valve (2), a partial stream of the exhaust gas can be conducted past the turbine (5) as required, the bypass valve (2) has a valve disk (12) and a valve stem (15), the bypass valve (2) is held in axially movable fashion by way of the valve stem (15), and the valve disk (12) can, in a closed state of the bypass valve (2), be brought into contact with a valve seat (18) in order to close off the bypass duct (4) in gas-tight and pressure-tight fashion, wherein that side of the valve disk (12) which is connected to the valve stem (15) faces toward the exhaust-gas pressure line (10), **characterized in that**, on the bypass valve (2), there is formed a pressure plate (14) which is held on the valve stem and which is movable in a recess (11) of a housing (13) of the exhaust-gas turbocharger (1).

2. Exhaust-gas turbocharger (1) according to Claim 1, **characterized in that** the area of that side of the pressure plate (14) which is exposed to the gas is smaller than or equal to the area of that side of the valve disk (12) which is exposed to the gas.

3. Exhaust-gas turbocharger (1) according to at least one of the preceding claims, **characterized in that** the valve stem (15) is held in axially movable fashion in a sliding guide (16).

4. Exhaust-gas turbocharger (1) according to at least one of the preceding claims, **characterized in that** the actuating means (7) is electrically and/or pneumatically actuable.

5. Exhaust-gas turbocharger (1) according to at least one of the preceding claims, **characterized in that** the recess (11) is closed off, so as to be sealed in terms of flow, with respect to the bypass duct (4) by means of a sealing element (17) of the pressure plate (14).

6. Exhaust-gas turbocharger (1) according to at least one of the preceding claims, **characterized in that** the recess (11) is connected to the outlet cross section (6) of the turbine (5) by way of an equalization line (8).

7. Exhaust-gas turbocharger (1) according to Claim 6, **characterized in that** the equalization line (8) is formed in the housing (13) of the exhaust-gas turbocharger (1).

8. Exhaust-gas turbocharger (1) according to at least one of the preceding claims, **characterized in that** a masking (19) is provided on the valve seal (18).

## Revendications

1. Turbocompresseur à gaz d'échappement (1), en particulier pour un moteur à combustion interne (3), qui est réalisé avec une soupape de dérivation (2) qui est disposée dans un canal de dérivation (4) d'une turbine (5) entre une conduite de pression de gaz d'échappement (10) et une section transversale de sortie (6) de la turbine (5) du turbocompresseur à gaz d'échappement (1), et qui est connectée à un moyen de réglage (7) pour commander le débit de gaz d'échappement à travers le canal de dérivation (4), un courant partiel de gaz d'échappement pouvant être guidé au besoin devant la turbine (5) par la soupape de dérivation (2), la soupape de dérivation (2) présentant un plateau de soupape (12) et une tige de soupape (15), la soupape de dérivation (2) étant retenue de manière déplaçable axialement avec la tige de soupape (15) et le plateau de soupape (12) pouvant être appliqué contre un siège de soupape (18) dans un état fermé de la soupape de dérivation (2), afin de fermer le canal de dérivation (4) de manière étanche aux gaz et à la pression, le côté du plateau de soupape (12) connecté à la tige de soupape (15) étant tourné vers la conduite de pression de gaz d'échappement (10), **caractérisé en ce qu'**une plaque de pression (14) reçue au niveau de la tige de soupape est réalisée sur la soupape de dérivation (2), laquelle peut être déplacée dans un évidement (11) d'un boîtier (13) du turbocompresseur à gaz d'échappement (1).

2. Turbocompresseur à gaz d'échappement (1) selon la revendication 1, **caractérisé en ce que** la surface du côté de la plaque de pression (14) exposé au gaz est inférieure ou égale à la surface du côté dû plateau de soupape (12) exposé au gaz.

3. Turbocompresseur à gaz d'échappement (1) selon au moins l'une quelconque des revendications précédentes, **caractérisé en ce que** la tige de soupape (15) est retenue de manière déplaçable axialement dans un guide coulissant (16).

4. Turbocompresseur à gaz d'échappement (1) selon au moins l'une quelconque des revendications précédentes, **caractérisé en ce que** le moyen de réglage (7) peut être commandé de manière électrique et/ou pneumatique.

5. Turbocompresseur à gaz d'échappement (1) selon au moins l'une quelconque des revendications précédentes, **caractérisé en ce que** l'évidement (11) est fermé de manière étanche à l'écoulement par rapport au canal de dérivation (4) au moyen d'un élément d'étanchéité (17) de la plaque de pression (14).

6. Turbocompresseur à gaz d'échappement (1) selon au moins l'une quelconque des revendications précédentes, **caractérisé en ce que** l'évidement (11) est connecté à la section transversale de sortie (6) de la turbine (5) par une conduite d'équilibrage (8).

7. Turbocompresseur à gaz d'échappement (1) selon la revendication 6, **caractérisé en ce que** la conduite d'équilibrage (8) est réalisée dans le boîtier (13) du turbocompresseur à gaz d'échappement (1).

8. Turbocompresseur à gaz d'échappement (1) selon au moins l'une quelconque des revendications précédentes, **caractérisé en ce qu'**un masquage (19) est prévu sur le siège de soupape (18).
